Europäisches Patentamt

European Patent Office

Office européen des brevets

(19)

(11) Veröffentlichungsnummer: **0 267 149 B1**

(12) **EUROPÄISCHE PATENTSCHRIFT**

(45) Veröffentlichungstag der Patentschrift: **04.09.91**

(51) Int. Cl.⁵: **B01D 33/00**

(21) Anmeldenummer: **87810597.2**

(22) Anmeldetag: **16.10.87**

(54) **Verfahren zur Reinigung einer Siebtrommel sowie eine Siebtrommel.**

(30) Priorität: **17.10.86 CH 4143/86**

(43) Veröffentlichungstag der Anmeldung:
**11.05.88 Patentblatt 88/19**

(45) Bekanntmachung des Hinweises auf die
Patenterteilung:
**04.09.91 Patentblatt 91/36**

(84) Benannte Vertragsstaaten:
**AT CH DE FR LI**

(56) Entgegenhaltungen:
**DE-A- 2 237 912**
**DE-C- 65 179**
**GB-A- 965 274**
**US-A- 2 646 888**
**US-A- 3 979 289**

(73) Patentinhaber: **Nill, Werner**
**Eigenheimweg 45**
**CH-8400 Winterthur(CH)**

(72) Erfinder: **Nill, Werner**
**Eigenheimweg 45**
**CH-8400 Winterthur(CH)**

(74) Vertreter: **Gachnang, Hans Rudolf**
**Algisserstrasse 33**
**CH-8501 Frauenfeld(CH)**

**Beschreibung**

Gegenstand der vorliegenden Erfindung ist eine Siebtrommel in einer Abwasseranlage gemäss Oberbegriff des Patentanspruches 1.

Gegenstand der Erfindung ist weiter ein Verfahren gemäss Oberbegriff des Patentanspruches 6.

Siebtrommeln zur Reinigung von Abwasser sind bekannt. Sie dienen zum Zurückhalten und Ausscheiden von festen Verunreinigungen aus dem einer Abwasseranlage zufliessenden verschmutzten Wasser.

Eine aus der US-A-3,979,289 bekannte Siebtrommel besteht aus einem feinmaschigen zylindermantelförmig ausgebildeten Sieb, das um eine horizontale Achse umläuft. Der Zufluss des verschmutzten Wassers erfolgt axial ins Innere der Siebtrommel und durchströmt das Sieb im unteren Teil in radialer Richtung. Damit alles zugeführte Wasser das Sieb durchströmt, sind die Stirnflächen teilweise gegen feststehende Wände, z.B. die Wände des Beckens, in der die Siebtrommel angeordnet ist, abgedichtet.

Das sich im Innern des Siebes ansammelnde Siebgut gelangt durch die Drehung der Trommel von der Belegstelle an den Scheitel und wird dort mittels oberhalb des Siebes angeordneter Wasserdüsen in eine unterhalb dem Scheitel im Innern angeordnete Siebgutsammelrinne gespült. Durch die Siebgutsammelrinne verlässt das Siebgut stirnseitig das Trommelinnere.

Diese bekannte Siebtrommelanordnung hat den Nachteil, dass sie kontinuierlich von einem Motor angetrieben und mittels einem starken, die gesamte Siebbreite abdeckenden Wasserstrahl sauber gehalten werden muss. Sowohl das mit grossen Druck zugeführte Reinigungswasser, als auch der Antriebsmotor benötigen elektrische Energie, die einerseits teuer und anderseits in abgelegenen Anlagen nicht vorhanden ist.

Hier will die Erfindung Abhilfe schaffen.

Die Erfindung, wie sie in Anspruch 1 definiert ist, löst die Aufgabe, eine Siebtrommel zu schaffen, bei der die Reinigung auch ohne Zufuhr von elektrischer Energie und selbsttätig erfolgt.

Die Erfindung, wie sie in Anspruch 6 definiert ist, löst die Aufgabe, ein Verfahren zuschaffen, mit dem das Wasser zur Reinigung der Siebtrommel in geeigneter Weise auf die Siebtrommel geleitet werden kann

Durch die rahmenförmige Unterteilung der Sieboberfläche kann diese abschnittweise gereingt werden.

Durch den schlagartigen Einfall einer grossen Menge Wasser auf einen begrenzten, genau definierten Siebabschnitt lösen sich alle innen am Sieb anhaftenden Verunreinigungen und fallen in die Siebgutrinne. Gleichzeitig bewirkt die auf die Sieboberfläche aufprallende Wassermasse eine partielle Drehung des Siebes um einen vorgebbaren Winkel.

Anhand eines illustrierten Ausführungsbeispieles wird die Erfindung näher erläutert. Es zeigen:

Figur 1     eine perspektivische Darstellung einer Siebtrommel in einer Abwasseranlage,

Figur 2     eine vergrösserte Darstellung einer Lagerung der Siebtrommel,

Figur 3     einen Querschnitt durch eine Abwasseranlage mit einer Siebtrommel,

Figur 4     eine Seitenansicht der Siebtrommel in Figur 3.

In einem nicht massstäblich dargestellten Abwasserbecken 1 ist eine Siebtrommel 3 angeordnet. Die Siebtrommel 3 taucht in das Becken 1 ein und erstreckt sich über dessen gesamte Breite. An den Seitenwänden 7 und 9 oder an den Stirnflächen der Siebtrommel 3 können Dichtungsmittel angebracht sein (nicht gezeigt), die einen Durchtritt von verschmutztem Wasser vom Siebinnern ins Becken verhindern. Die Welle 5 der Siebtrommel 3 ist an den Seitenwänden 7 und 9 des Beckens 1 gelagert und liegt horizontal.

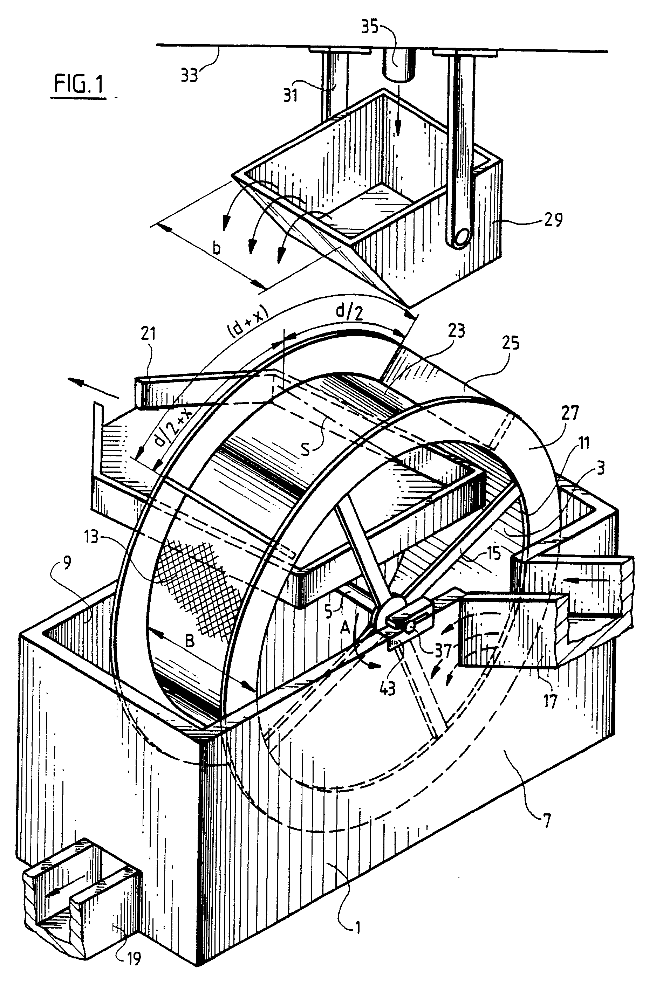

Die Siebtrommel 3 besteht aus einem zylindermantelförmig gebogenen Lochblech oder aus zylindermantelförmig auf einem Rahmen 11 aufgebrachten, ein Sieb 13 bildenden Gitterstäben. Der Rahmen 11, der das Sieb 13 trägt, ist über Speichen 15 mit der Welle 5 verbunden. Die Speichen 15 befinden sich nur an der dem Beschauer der Figur 1 zugewendeten Seite der Siebtrommel 3; die andere Seite ist offen. In der Wand 7 des Beckens 1 mündet eine Abwasserzuleitung 17 - in Figur 1 als Rinne dargestellt -; an der tiefsten Stelle des Beckens 1 verlässt eine Leitung 19 das Becken 1 und führt direkt zu einem tieferliegendem Gewässer.

In die offene Seite der Siebtrommel 3 ragt eine Sammelrinne 21, die zur Welle 5 leicht geneigt angeordnet und auf dem Rand des Beckens 1 abgestützt und gehalten ist. Die beiden seitlichen Ränder der Sammelrinne 21 liegen nahe der Siebinnenseite.

Auf der Peripherie des Siebes 13 sind in regelmässigen Abständen (d + x) im wesentlichen radial verlaufende Schaufeln 25 befestigt. Stirnseitig sind die Schaufeln 25 mit kreisringförmigen Blechen 27 verbunden, welche die Peripherie der Siebtrommel 3 etwa um den gleichen Betrag überragen, wie die Schaufeln 25.

Oberhalb der Siebtrommel 3 ist eine Spülkippe 29 herkömmlicher Bauart an zwei Trägern 31 schwenkbar an der Decke 33 befestigt. Die Breite b der Spülkippe 29 entspricht etwa der Breite B der Siebtrommel 3; der Inhalt der Spülkippe 29 ist gleich oder grösser als der Inhalt des zwischen zwei Schaufeln 25, den kreisringförmigen Blechen 27 und der Oberfläche des Siebes 13 liegenden Raumes. Die Speisung der Spülkippe 29 erfolgt durch eine Speisewasserleitung 35.

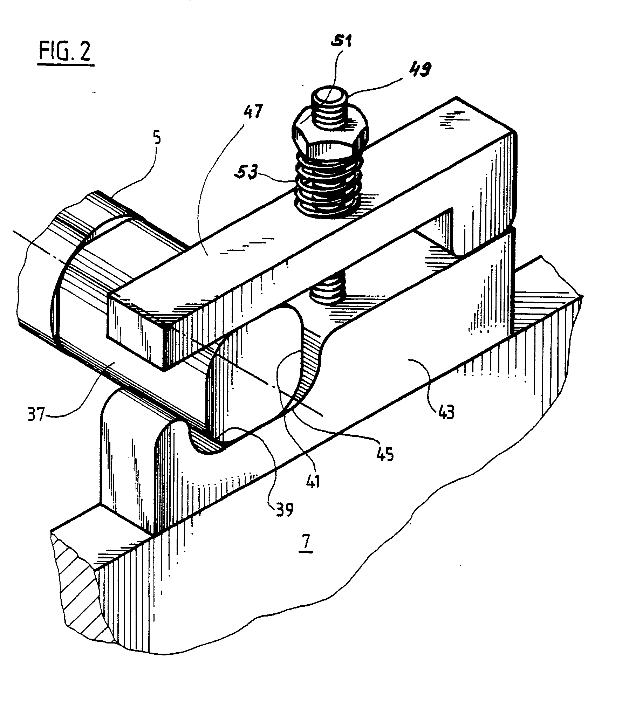

Mindestens eines der Wellenenden 37 der Welle 5 weist keinen kreisrunden, sondern einen mehreckigen Querschnitt auf. Die Anzahl der Ecken 39 ist identisch mit der Anzahl der Schaufeln 25 auf der Sieboberfläche. Vorzugsweise sind vier oder mehr Schaufeln 25 angebracht. Die Flächen 41 zwischen den Ecken 39 der Wellenenden 37 können eben oder gekrümmt sein und liegen in einem Lagerbock 43 mit einer analog ausgebildeten Auflagefläche 45 (Figur 2).

Oberhalb der Auflagefläche 45 kann ein Niederhalter 47 angeordnet sein, der mit einer Schraube 49 und einem zwischen den Schraubenmutter 51 und dem Niederhalter 47 eingesetzten Federnpaket 53 verspannt werden kann.

Selbstverständlich können auch andere als die beschriebenen Vorrichtungen zur Begrenzung der Drehbewegung eingesetzt werden.

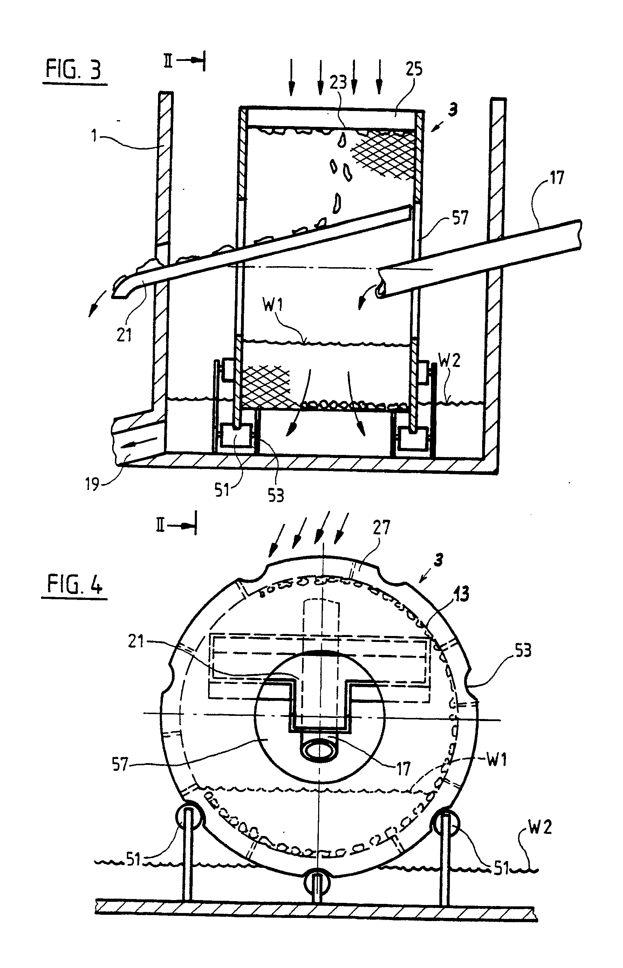

In einer weiteren Ausgestaltung der Erfindung gemäss Figur 3 ist die Breite der Siebtrommel 3 geringer als die Breite des Beckens 1. Die stirnseitig die Siebtrommel 3 begrenzenden ringförmigen Bleche 27 weisen im Zentrum beidseitig eine minimale kreisrunde Oeffnung 57 auf, durch die einerseits das Abwasser durch die Leitung 17 und andererseits die Verunreinigungen über die Rinne 21 zu- bzw. abgeführt werden.

Die Siebtrommel ist auf mindestens zwei Rollenpaaren 51 gelagert, die auf dem Boden des Beckens 1 angeordnet sind. Am Umfang der Siebtrommel bzw. der beiden stirnseitigen Bleche 27 sind in regelmässigen Abständen kreisförmige Einbuchtungen 53 angebracht. Die Rollen 51 sind in einem Abstand angeordnet, der dem Abstand von jeweils benachbart oder nicht benachbart liegenden Einbuchtungen 53 entspricht. Im folgenden wird die Funktionsweise der Siebtrommel 3 näher erläutert: Durch den Abwasserzufuhrkanal 17 wird verschmutztes Abwasser ins Innere der Siebtrommel 3 geleitet. Da das Wasser seitlich die Siebtrommel 3 nicht verlassen kann, ist es gezwungen, durch das Sieb 13 hindurch nach unten zu fliessen. Die mitgeführten Verunreinigungen werden vom Sieb 13 zurückgehalten und das gereinigte Wasser kann durch die Leitung 19 einem Gewässer zugeführt werden.

Der Durchfluss des Wassers durch das Sieb ist gewährleistet, da der Wasserstand W1 im Sieb höher liegt als der Wasserstand W2 im Becken.

In regelmässigen oder unregelmässigen Zeitintervallen wird der Inhalt der Spülkippe 29 ausgeschüttet und schlägt von oben auf die Oberfläche des Siebes 13 auf. Infolge des durch die Schaufeln 25 und die Bleche 27 gebildeten Rahmens 23 auf der Sieboberfläche wird der Wasserschwall daran gehindert, seitlich auszuweichen. Es baut sich kurzzeitig eine Wassersäule auf die rasch gleichzeitig durch alle Oeffnungen im Sieb 13 innerhalb des Rahmens 23 hindurchfliesst, die auf der Innenseite anhaftenden Verunreinigungen mitreisst und in die unter dem Rahmen 23 angeordnete Sammelrinne 21 spült, von wo sie zur Klär- oder Reinigungsanlage geleitet werden.

Durch das Gewicht des kurzzeitig auf der Sieboberfläche gesammelten Wassers wird die Siebtrommel 3 um einen von der Welle 5 oder den Einbuchtungen 53 vorgegebenen Wert in Richtung des Pfeiles A gedreht. Die Verunreinigungen gelangen auf diese Weise von unten zum obenliegenden Scheitel. Damit diese Drehung erfolgt, sind die Flächen 41 an den Wellenenden 37, bzw. die Einbuchtungen 53 derart angeordnet, dass sich jeweils eine der Schaufeln 25 näher am Scheitel S befindet als die andere Schaufel 25 ($\frac{d}{2}$; $\frac{d}{2}$ + x).

Mit dem federbelasteten Niederhalter 43 wird verhindert, dass sich die Siebtrommel 3 sich kontinuierlich zu drehen beginnt, sondern nach jedem Wasserschwall stehen bleibt, bis ein neuer erfolgt.

**Patentansprüche**

1. Siebtrommel (3) in einem Becken (1) einer Abwasseranlage mit einem um eine horizontale Achse drehbar gelagerten Sieb (13) und einer stirnseitig ins Innere der Siebtrommel (3) ragenden, unterhalb des Scheitels (S) angeordneten Sammelrinne (21), dadurch gekennzeichnet, dass die Siebtrommel (3) keinen eigenen Antrieb besitzt, dass am Sieb stirnseitig kreisringförmige Bleche (27), welche die Oberfläche des Siebes (13) überragen, angebracht sind, dass auf der Peripherie des Siebes (13) im wesentlichen radial verlaufende und parallel zur Achse liegende Schaufeln (25) angebracht sind, welche mit den kreisringförmigen Blechen (27) eine rahmenförmige Unterteilung der Sieboberfläche bilden, und dass an der Siebtrommel Mittel (37,41,45;53,51) zur Begrenzung des Drehwinkelweges vorgesehen sind.

2. Siebtrommel nach Anspruch 1, dadurch gekennzeichnet, dass das Sieb (13) an einer in der Drehachse liegenden Welle (5) befestigt ist und dass die Mittel zur Begrenzung des Drehwinkelweges aus einem mehrkantig ausgebildeten Wellenende (37) bestehen, welches Wellenende (37) mindestens teilweise auf einer analog ausgebildeten Auflagefläche (45) aufliegt.

3. Siebtrommel nach Anspruch 2, dadurch gekennzeichnet, dass die Flächen (41) am Wellenende (37) eben oder gekrümmt ausgebildet sind.

4. Siebtrommel nach Anspruch 1, dadurch gekennzeichnet, dass an der Peripherie der Siebtrommel (3) kreisförmige Einbuchtungen (53) angebracht sind, in denen die Siebtrommel (3) tragende Rollen (51) in Auflage gelangen.

5. Siebtrommel nach einem der Ansprüche 1 bis 4, dadurch gekennzeichnet, dass in Ruhestellung der Trommel jeweils eine von zwei benachbarten Schaufeln (25) näher am Scheitel (S) der Siebtrommel (3) liegt als die andere.

6. Verfahren zur Reinigung einer Siebtrommel (3) nach einem der Ansprüche 1 bis 5, dadurch gekennzeichnet, dass in zeitlichen Abständen Wasser aus einer oberhalb der Siebtrommel (3) angeordneten Spülkippe (29) in einem Schwall auf einen definierten Abschnitt der Sieboberfläche geleitet wird, wodurch die im Inneren des Siebes (13) anhaftenden Verunreinigungen in die Sammelrinne (21) gespült werden und wobei die Siebtrommel (3) durch das Gewicht des auf die Sieboberfläche geleiteten Wassers um einen vorgegebenen Winkelweg gedreht wird.

## Claims

1. Sieve drum (3) in a tank (1) of a sewage disposal plant with a sieve (13) which is pivoted on a horizontal axis and a projecting collecting channel (21) arranged on the front face inside the drum underneath the apex (S), characterized in that the sieve drum (3) has no drive of its own, that annular plates (27) are fitted on the front face of the sieve which overhang the surface of the sieve drum (13), that, on the periphery of the sieve (13), paddles (25) are fitted running substantially radially and parallel to the axis, which, with the annular shaped paddles (27), form a frame shaped under part of the surface of the sieve (13) and that means are provided on the sieve drum (37, 41, 45, 53, 51) for the limitation of the angle of rotation.

2. Sieve drum according to Claim 1, characterized in that the sieve (13) is fastened on a shaft lying in the axis and that the means for the limitation of the angle of rotation consist of a many sided shaft end which lies, at least partly, on a mating stop face (45).

3. Sieve drum according to Claim 2, characterized in that the surfaces (41) on the end of the shaft (37) are formed flat or curved.

4. Sieve drum according to Claim 1, characterized in that on the periphery of the sieve drum (3), circular recesses (53) are provided, in which the carrying rollers (51) of the sieve drum (3) are supported.

5. Sieve drum according to one of the Claims 1 to 4, characterized in that, in the rest position of the drum, one of two neighbouring paddles (25) respectively lies nearer to the apex (S) of the sieve drum (3) than the other paddle.

6. Method for cleaning a sieve drum (3) according to one of the Claims 1 to 5, characterized in that, in chronological intervals, water from a tipping sluicing container (29) arranged above the sieve drum (3) is guided in a surge on to a defined section of the sieve surface, through which dirt adhering to collecting channel inside the sieve (13) is flushed out and whereby the sieve drum (3), through the weight of the water guided on to the sieve surface, is turned through a predetermined angle.

## Revendications

1. Tamis à tambour (3) disposé dans un bassin (1) d'une installation de traitement d'eaux usées et comprenant un tamis (13), monté rotatif autour d'un axe horizontal, et une goulotte collectrice (21) disposée au-dessous de la génératrice supérieure (S) du tamis à tambour (3) et faisant saillie à l'intérieur de ce dernier par une face frontale, caractérisé en ce que le tamis à tambour (3) ne comporte aucun entraînement propre, en ce que des tôles (27), de forme annulaire, sont montées sur le tamis suivant ses faces frontales et dépassent de la surface du tamis (13), en ce que des aubes (25) sont fixées suivant le contour périphérique du tamis (13), suivant une orientation pratiquement radiale et parallèlement à l'axe, ces aubes (25) formant avec les tôles annulaires (27) une division de la surface du tamis à la façon d'un châssis, et en ce que des moyens (37, 41, 45 ; 53, 51) sont prévus sur le tamis à tambour pour limiter son déplacement angulaire.

2. Tamis à tambour suivant la revendication 1, caractérisé en ce que le tamis (13) est fixé sur un arbre (5) situé sur l'axe de rotation et en ce que les moyens de limitation du déplacement angulaire consistent en un embout (37) de l'arbre qui est à section polygonale et qui prend appui au moins partiellement sur une surface d'appui (45) de forme analogue.

3. Tamis à tambour suivant la revendication 2, caractérisé en ce que les faces (41) de l'embout (37) de l'arbre sont planes ou courbes.

4. Tamis à tambour suivant la revendication 1, caractérisé en ce que, sur le contour périphérique du tamis à tambour (3), il est ménagé des parties en retrait (53), en arc de cercle , dans lesquelles prennent appui des galets (51) portant le tamis à tambour (3).

5. Tamis à tambour suivant l'une des revendications 1 à 4, caractérisé en ce que, dans la position de repos du tambour, pour toute paire d'aubes (25) voisines, l'une est chaque fois plus proche de la génératrice supérieure (S) du tamis à tambour (3) que l'autre.

6. Procédé de nettoyage d'un tamis à tambour (3) suivant l'une des revendications 1 à 5, caractérisé en ce qu'à certains intervalles dans le temps, de l'eau est projetée à la façon d'un jet sur une section déterminée de la surface du tamis à partir d'un réservoir basculant (29) disposé au-dessus du tamis à tambour (3), de sorte que les impuretés adhérant à l'intérieur du tamis (13) sont chassées dans la goulotte collectrice (21) et que le tamis à tambour (3) est déplacé en rotation, d'un angle fixé à l'avance, par le poids de l'eau projetée sur la surface du tamis.

FIG.1

FIG. 2

EP 0 267 149 B1

FIG. 3

FIG. 4

8